# EUROPEAN PATENT SPECIFICATION

(11) **EP 4 436 794 B1**
(45) Date of publication and mention of the grant of the patent: **28.01.2026**
(21) Application number: 22817811.7
(22) Date of filing: 08.11.2022
(51) Int. Cl.: B60C 11/16

(54) **STUD AND STUDDED TYRE FOR VEHICLE WHEELS**
SPIKE- UND SPIKEREIFEN FÜR FAHRZEUGRÄDER
CLOU ET PNEU CLOUTÉ POUR ROUES DE VÉHICULES

(30) Priority: 26.11.2021 IT 202100029996
(43) Date of publication of application: 02.10.2024
(73) Proprietor: Pirelli Tyre S.P.A., 20126 Milan (IT)
(72) Inventor: CASAROTTO, Giovanni, 20126 Milano (IT); PUTTI, Alberto Maria, 20126 Milano (IT); SPEZIARI, Diego Ettore, 20126 Milano (IT); GUERRA, Riccardo, 20126 Milano (IT)
(74) Representative: Susanetto, Carlo
(86) International application number: PCT/IB2022/060728
(87) International publication number: WO 2023/094920

(56) References cited:
- JP-A- 2018 095 081
- KR-B1- 101 411 152
- US-A- 4 108 230

## Description

The present invention relates to a stud and a tyre for vehicle wheels which is specifically formed to afford optimum performance levels in terms of grip on icy road surfaces, at the same time having an effective retention action for the stud inside the tread band.

A tyre generally comprises a carcass structure which is shaped toroidally about a rotation axis and which comprises at least one carcass ply which has end edges which are engaged in respective annular anchoring structures.

In a radially external position with respect to the carcass structure, there is provided a belt structure comprising one or more belt layers which are arranged in a radially superimposed manner with respect to each other and with respect to the carcass ply, having textile or metal reinforcement cords with a crosswise orientation and/or substantially parallel orientation relative to the circumferential development direction of the tyre.

In a radially external position with respect to the belt structure, there is applied a tread band which is made of an elastomer material and on which a tread surface which is intended for contact with the road surface is defined.

It is known that the grip of a tyre on an icy surface is made particularly difficult by the reduced friction coefficient of the ice. In order to overcome this drawback, there are widely used, particularly in countries with very harsh winter climates, tyres on the tread band of which metal elements are suitably fixed, called "studs", which by projecting over a suitable extent from the tread surface of the tyre are able to cut into the icy surface, thereby providing an adequate gripping action of the tyre even on this type of road surface.

In general, a stud is formed by a base which is received in a radially internal position in a hole which is formed in the tread band, by a body which extends from the base and which is received together therewith in a radially external position in this hole, and by a gripping pin (in the field, known by the term "pin") which extends from the body of the stud and which is intended to project from the tread band outside the hole.

Typically, there are identified in the body of the stud a shank which extends from the base with a reduced cross-section with respect to the base and a head which extends between the shank and the gripping pin, and which generally has a greater cross-section with respect to the shank.

The term "lateral surface" of a stud or a portion thereof, for example, of the body of the stud, is intended to mean the external surface of the stud or the portion thereof, where applicable without the surface of the axial ends of the stud and the surfaces which, during use, do not face a wall of the hole which is formed in the tread band.

In particular, therefore, the surface of the base which is intended during use to be directed towards the bottom of the hole and the surface of the body of the stud which is intended during use to be directed towards the exterior of the hole, are not considered to be part of the lateral surface of the stud or a portion thereof.

The term "profile" of a surface of a stud or a portion thereof is intended to mean the line of intersection of this surface with a plane of section comprising the longitudinal axis of the stud.

If the stud or the portion thereof is symmetrical with respect to the longitudinal axis of the stud, the profile of the stud or of the portion thereof is identical to itself, independently of the plane of section.

A surface, for example, a lateral surface, is "curved" when the line of intersection of this surface with any plane of section is curvilinear, that is to say, does not have rectilinear portions.

A surface of the stud or a profile thereof is "convex" when each line which joins two points of the surface, or the profile thereof is entirely inside the stud.

In the converse case, the surface of the stud or the profile thereof is "concave".

The term "transverse dimension" of the stud at a point thereof is intended to be the measurement of the diameter of a hypothetical circle with an area equal to the area of the section of the stud perpendicular to the longitudinal axis of the stud and extending through this point.

Furthermore, the term "mean transverse dimension" of the stud or a portion thereof is intended to mean the measurement of the diameter of a hypothetical circle which is obtained by dividing the volume of the stud or the portion thereof by the axial dimension of the stud or the portion thereof.

The term "shank" of a stud is intended to mean the portion of the body of the stud which extends in the axial direction from the base as far as a plane, which is perpendicular to the axis of the stud, where the profile of the lateral surface of the body has a minimum zone.

In particular, it may be noted that the term "minimum zone" is intended to mean a zone of the profile in which the distance from the longitudinal axis of the stud is less than the zones of the profile which are immediately adjacent, both in one direction and in the opposite direction. This minimum zone can be represented by a minimum point or by a rectilinear portion in which this smaller distance with respect to the adjacent zones remains substantially constant (in other words, a rectilinear portion parallel to the axis of the stud).

It may further be noted that, if the minimum zone is formed by a rectilinear portion which is parallel with the axis of the stud, the shank is intended to be understood to extend as far as the point of the minimum zone furthest away from the base.

Preferably, in the minimum zone, the distance of the profile of the body of the stud from the longitudinal axis of the stud reaches the minimum value thereof.

Consequently, the term "head" of a stud is intended to mean the portion of the body of the stud which extends in continuation of the shank of the body as far as the gripping pin.

Preferably, the head comprises the maximum transverse dimension of the body of the stud.

The shank has a mean transverse dimension which is less than both the mean transverse dimension of the base and the mean transverse dimension of the head.

The term "inflection zone" of a profile is intended to mean a zone in which a variation of concavity of the line of the profile is brought about.

In a preferred embodiment, the inflection zone comprises an "inflection point" which is intended to mean a point in which the function which is represented by the line of the profile has a second derivative which is zero and a third derivative which is different from zero.

However, the "inflection zone" may also comprise, as an alternative to an inflection point which is defined as above in a rigorously mathematical manner, geometric forms which are generally similar to the inflection point, such as, for example, an angular point or a short rectilinear portion. In the first case, there is provision for the tangents to the line of the profile at one side and the other of the angular point to differ from each other by an angle less than 30°. In the second case, there is provision for the rectilinear portion of the inflection zone to be very limited, with an extent less than 3% of the axial dimension of the stud and for the zones of the profile adjacent to the inflection zone to be curvilinear.

CA3029771A1 sets out a tyre for vehicles having a tread profile and studs, each of which has a body and a gripping pin, wherein the gripping pin with a circumferential gripping edge serves to form a gripping edge arranged in the front direction with respect to the rotation during movement and a gripping edge which is located behind the rotation direction and in which the body is formed by a base flange, a central portion and an upper flange, wherein the upper flange and the central portion are each formed with a contour with a circular, oval or elliptical section in the planes of section perpendicular to the longitudinal extent of the stud.

US 4108230, KR 101411152 and JP 2018095081 disclose further exemplary studs for vehicle tyres according to the prior art.

The Applicant has previously observed that one of the most important causes which lead to a deterioration over time of the performance levels of a studded tyre is the detachment of one or more studs from the tread band.

Therefore, the Applicant has verified that, during the normal driving of a tyre on a road surface, the studs are subjected to powerful stresses which tend to extract them from the holes in which they are received. In particular, the Applicant has detected that the possibility of the stud leaving the tread band is far greater in studded tyres mounted on relatively heavy and powerful vehicles which are able to confer powerful accelerations on the vehicle.

Furthermore, the Applicant has observed that the retention action of the stud inside the seat which is formed in the tread band generally and widely results from the interference between the base of the stud and the walls of the hole which surround the body of the stud, the section of which is generally less than the section of the base.

However, the Applicant has verified how the tangential stresses which are applied to the gripping pin of the stud bring about an oscillating movement of the stud inside the hole which may involve, in the worst case, an immediate extraction of the stud or, with consideration of the difference of rigidity between the stud (highly rigid) and the tread band (highly deformable), a relative movement of the body of the stud with respect to the walls which delimit the hole in which it is received. This involves an inevitable action of friction between the stud (particularly the base thereof) and the tread band which, over time, may lead to a localized wear of the walls of the seat in which the stud is received, with a resultant increase in the possibility of an undesirable extraction thereof from the receiving seat.

The Applicant, with the intention of improving the performance levels of the studded tyres and in particular the capacity thereof to retain the studs in the tread band, has therefore perceived that the retention action of the stud by the tread band does not have to exclusively result from the interference between the base of the stud and the walls of the receiving seat thereof, but instead it is necessary to increase the retention action applied to the lateral surface of the body of the stud.

The use of studs of the type set out in CA 3029771A1 does not assist in significantly solving the problem set out above, the above-mentioned studs having, according to the opinion of the Applicant, a profile with a straight section having a plurality of zones having a sudden change of section.

In fact, the Applicant has perceived that this retention action depends in a relevant manner both on the contact surface between the tread band and the stud and on the pressure applied to the surface of the stud at this contact surface.

More specifically, the Applicant has perceived that a high pressure applied to limited regions of the stud may be less effective in retaining the stud inside the seat with respect to a pressure which is locally less high but which is distributed over a contact surface which is much more extensive.

On the basis of these first insights, the Applicant has perceived that, in order to increase the retention action of the stud inside the respective seat, the stud has to have a structure which allows, to the greatest possible extent, bonding to the walls of the hole of the tread band in which it is inserted, taking into account the characteristics of deformability and resilience of the elastomer material of the tread band.

Therefore, the Applicant has found that by configuring the stud in such a manner that at least a relevant portion of the lateral surface thereof has a profile with gentle curves and without any abrupt variations of inclination, such as, for example, at the edges, there is produced optimum bonding of the elastomer material of the tread band with respect to the lateral surface of the stud, bringing about a substantial increase both of the retention action of the stud inside the hole (and therefore of the durability over time of the performance levels of the studded tyre) and of the gripping capacity of the stud on icy ground.

In particular, in a first aspect thereof, the invention relates to a stud for vehicle tyres according to claim 1 or to claim 2.

In a second aspect thereof, the invention is further directed towards a studded tyre according to claim 15.

As a result of these characteristics, the Applicant considers that the pressure applied to the head of the stud by the side walls of the hole in which it is received is distributed in a substantially uniform manner and over a contact surface which is particularly extensive. This brings about a retention action for the stud inside the tread band which is particularly effective, allowing at least two important advantages to be afforded: the first is a greater efficiency in terms of the gripping action on the icy road and the second is an increase in the average dwell time of the stud in the hole. In other words, the stud according to the present invention allows a studded tyre to be obtained with better driving performance levels and over a longer time.

Furthermore, the Applicant considers that a stud having the characteristics set out above is simple to manufacture and promotes the step of insertion inside the hole which is formed in the tread band.

In at least one of the above-mentioned aspects, the present invention may have at least one of the preferred features indicated below.

Preferably, the entire extent of said first lateral surface of said head has a curvilinear profile over the entire development thereof.

In this manner, the entire lateral surface of the head does not have edges and allows the uniform bonding to the side walls of the seat of the stud which is formed in the tread band.

In some embodiments, said head is symmetrical with respect to said longitudinal axis.

The manufacture of the stud is thereby simplified as is, to an even greater extent, the insertion of the stud in the respective seat formed in the tread band.

In some embodiments, said shank is laterally delimited by a second lateral surface and at least 80% of the extent of said second lateral surface is curved.

In this manner, the contact pressure between the tread band and the lateral surface of the stud is widened in a uniform manner including at the shank, thereby increasing the retention action of the stud in the respective seat.

Preferably, the entire extent of said second lateral surface has a curvilinear profile over the entire development thereof.

Preferably, said shank is symmetrical with respect to said longitudinal axis.

Both the manufacture of the stud and the insertion thereof in the respective seat formed in the tread band are thereby simplified.

In some embodiments, said second lateral surface has a concave profile.

In some embodiments, said second lateral surface has a profile with a substantially constant radius of curvature.

In this manner, the elastomer material of the tread band can bond in a uniform manner to the lateral surface of the shank and, consequently, can apply a substantially constant pressure thereto.

Preferably, said second lateral surface has a profile with a radius of curvature between 1.3 mm and 3.5 mm, more preferably between 2 mm and 3 mm.

In this manner, the shank is thereby gradually connected to the base of the stud.

In some embodiments, said first lateral surface comprises a connection region with respect to said second lateral surface.

Preferably, said connection region extends from said second lateral surface while maintaining the same curvature as said second lateral surface.

Therefore, the connection region of the first lateral surface extends from the minimum zone which delimits the shank at the side opposite the base of the stud and increases the transverse dimension of the stud, while maintaining the same concave profile.

In some embodiments, said first lateral surface comprises a first portion which extends from said connection region and which has a convex profile.

Preferably, said first portion and said connection region are connected to each other by means of a first inflection zone, more preferably by means of a first inflection point.

There is thereby ensured a gentle transition between a concave surface portion and a convex surface portion in such a manner that the side wall of the seat formed in the tread band can maintain continuity of contact with this stud portion.

In some embodiments, the distance measured along said longitudinal axis between said first inflection zone and an uppermost plane of said body, from which said gripping pin extends, constitutes a fraction between 50% and 80%, more preferably a fraction between 55% and 65%, of the longitudinal dimension of said body.

In some embodiments, said first portion of said first lateral surface has a profile with a substantially constant radius of curvature.

In this manner, the continuous and uniform contact of the elastomer material of the tread band with the lateral surface of the head is promoted.

In some embodiments, said first lateral surface extends as far as an uppermost plane of said body, from which said gripping pin extends.

In some embodiments, said uppermost plane is perpendicular to the axis of the stud and the gripping pin projects from the uppermost plane along the axis of the stud.

In some embodiments, the gripping pin is symmetrical with respect to the axis of the stud.

In some embodiments, said uppermost plane has a transverse dimension substantially equal to the minimum transverse dimension of said shank.

In some embodiments, said first portion of said first lateral surface extends from said connection region as far as said uppermost plane.

Preferably, in such embodiments, said first portion of said first lateral surface has a profile with a radius of curvature between 4 mm and 6 mm.

In some embodiments, said first lateral surface comprises a second portion which is connected to said first portion and which has a concave profile.

As a result of this feature, the head of the stud is retained in a more effective manner inside the respective seat which is formed in the tread band.

Preferably, said second portion extends as far as said uppermost plane.

In some embodiments, said first portion of said first lateral surface is connected to said second portion of said first lateral surface by means of a second inflection zone, more preferably by means of a second inflection point.

A gentle transition is thereby ensured between the first convex portion and the second portion of the lateral surface of the head in such a manner that the wall of the seat formed in the tread band can maintain continuity of contact with the head of the stud and apply thereto a substantially constant pressure.

In some embodiments, the distance measured along said longitudinal axis between said second inflection zone and said uppermost plane of said body constitutes a fraction between 15% and 25% of the longitudinal dimension of said body.

In some embodiments, said first portion of said first lateral surface has a profile with a radius of curvature between 2 mm and 3.5 mm.

These embodiments are particularly suitable for studs in which the head also has the above-mentioned second concave portion.

In some embodiments, said second portion of said first lateral surface has a profile with a substantially constant radius of curvature.

Preferably, said second portion of said first lateral surface has a profile with a radius of curvature between 2 mm and 3.5 mm.

In some embodiments, the radius of curvature of said second portion of said first lateral surface is substantially equal to the radius of curvature of said second lateral surface.

In some embodiments, the measurement of the radius of curvature of said first portion of said first lateral surface is substantially equal to the measurement of the radius of curvature of said second portion of said first lateral surface.

In this manner, the shape of the head of the stud is particularly symmetrical and allows optimum bonding to the wall of the respective seat of the stud.

In some embodiments, said first inflection zone and said second inflection zone are aligned in a direction substantially parallel to the longitudinal axis of said stud.

In some embodiments, said body and said base of said stud are made of aluminium.

In this manner, the stud is generally lighter and less wearing with respect to the road surface in the case of travel on a road surface which is not covered with snow or ice.

In other embodiments, said body and said base of said stud are made of steel.

The features and advantages of the invention will be better understood from the detailed description of a number of preferred embodiments thereof which are illustrated by way of non-limiting example with reference to the appended drawings, in which:
- Figure 1 is a schematic view of a generic tyre which is provided with studs according to a first embodiment of the present invention;
- Figure 2 is a view, drawn to an enlarged scale and as a section along a radial plane, of a portion of the studded tyre of Figure 1, illustrating a stud which is received in a hole formed in the tread band of the tyre;
- Figure 3 is a view similar to Figure 2, illustrating the stud before being inserted in the hole;
- Figure 4 is a schematic, perspective view of the stud of Figure 2;
- Figure 5 is a schematic front view of the stud of Figure 2;
- Figures 6 to 9 are front views of additional embodiments of studs according to the present invention.

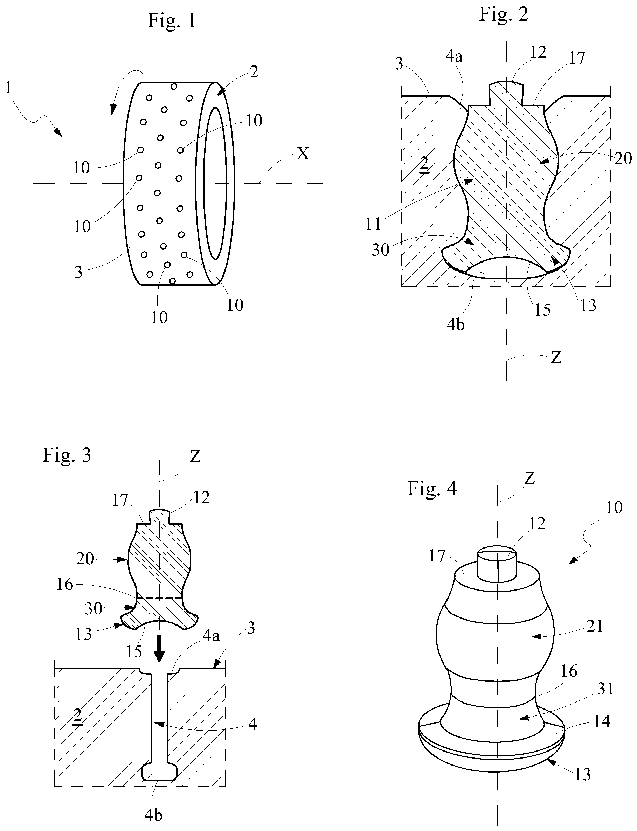

Initially with reference to Figures 1 to 5, there is generally designated 1 a studded tyre which is provided with studs 10 according to a first embodiment of the present invention.

The tyre 1 generally comprises a tread band 2 which is configured toroidally about a rotation axis X of the tyre 1 and which is provided in a radially external position on a belt structure of the tyre 1 according to a configuration which is known per se in the technical field being referred to.

The tread band 2 is made of elastomer material and there remains defined thereon a tread surface 3 which is radially external, and which is intended for contact with the road surface during rolling movement of the tyre 1 about the axis X.

A plurality of holes 4 are formed in the tread band 2 and are mutually identical and positioned in a suitable manner along the development of the tread surface 3.

Each hole 4 extends in a substantially radial direction and has an opening 4a at the tread surface 3 and a bottom 4b which is closed at the longitudinally opposite side.

At the opening 4a and the bottom 4b, the hole 4 has a diameter which is enlarged with respect to the intermediate portion of the hole which preferably has a cylindrical shape.

A corresponding stud 10 which comprises a body 11 which is received inside the hole 4 and which extends along a longitudinal axis Z of the stud 10 is received in an engaging manner in each hole 4.

The stud 10, as well as the other embodiments described in the following description, is formed in a substantially symmetrical manner with respect to the longitudinal axis Z.

However, there are further provided alternative embodiments, in which the stud has an asymmetrical conformation with respect to the longitudinal axis Z.

The body 11 is interposed between a gripping pin 12 and a base 13 which extends from the longitudinally opposite ends of the body 11.

The gripping pin 12 is made of a material with a high level of hardness and resistance to wear, for example, made of tungsten carbide, and extends longitudinally from the body 11 so as to project from the hole 4 through the opening 4a outside the tread surface 3.

The base 13 is preferably made in a single piece with the body 11, for example, from aluminium, and is received in the hole 4 in a radially internal position, substantially in a manner supported on the bottom 4b.

The base 13 has a conformation with a circular cross-section, the diameter of which constitutes the greatest transverse dimension of the stud 10.

The base 13 is joined to the body 11 by means of a tapered connection surface 14 while the surface of the base 13 directed at the longitudinally opposite side towards the body 11 has a suitably shaped profile at the peripheral region thereof, which is spaced apart from the longitudinal axis Z and with a wide recess 15.

This conformation of the base 13 promotes the insertion of the stud 10 in the hole 4 and further allows the overall weight thereof to be contained.

The body 11 comprises a head 20, from which the gripping pin 12 extends and a shank 30 which extends from the base 13 as far as the head 20.

In particular, the shank 30 extends from the connection surface 14 progressively reducing the diameter thereof up to a neck section 16, in which the body 11 has a minimal diameter with respect to the adjacent sections while the head 20 extends from the neck section 16, progressively increasing the diameter thereof up to a maximum section 18 in order to then decrease it again as far as an uppermost plane 17 of the body 11 which is substantially perpendicular to the longitudinal axis Z, from which the gripping pin 12 projects.

The shank 30 therefore has a mean transverse dimension which is less than the base 13 and the head 20.

In this embodiment of the stud, the measurement of the diameter of the uppermost plane 17 is substantially equal to the diameter of the neck section 16, both constituting the minimal transverse dimension of the body 11 which is approximately 4 mm.

The stud 10 has a total axial dimension H of approximately 10 mm, which is formed by the total of the axial dimension H1 of the base 13 of approximately 1.5 mm, the axial dimension H2 of the shank 30 of approximately 1.5 mm, the axial dimension H3 of the head 20 of approximately 5.8 mm and the axial dimension H4 of the gripping pin 12 of approximately 1.2 mm.

The head 20 is laterally delimited by a first lateral surface 21 which extends from the uppermost plane 17 as far as the neck section 16, while the shank 30 is laterally delimited by a second lateral surface 31 which extends from the neck section 16 as far as the connection surface 14.

Both the first lateral surface 21 and the second lateral surface 31 are entirely curved.

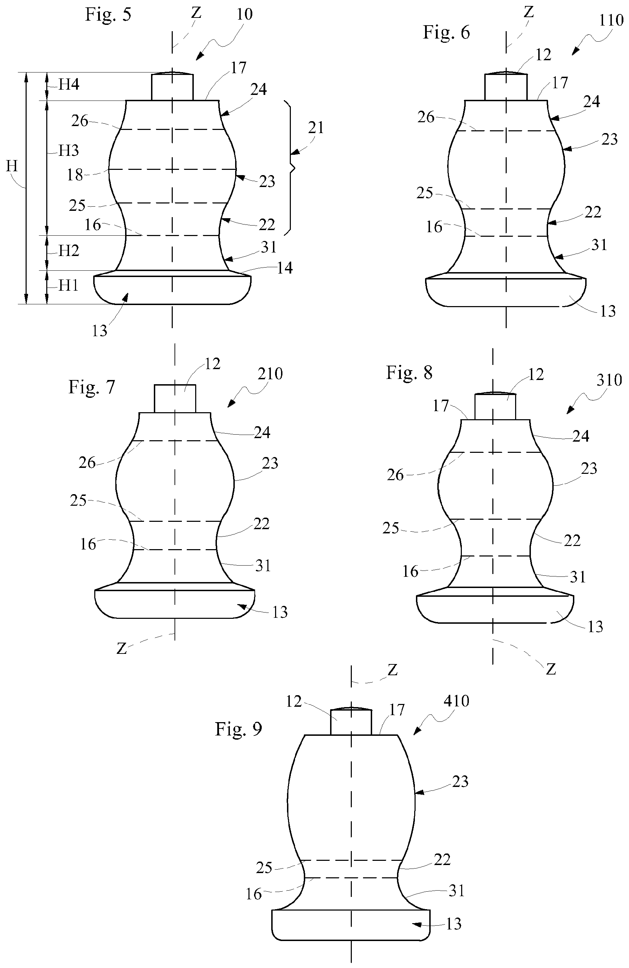

This aspect is clearly illustrated in Figure 5, which depicts the respective profile thereof which, as a result of the axial symmetry of the stud 10, remains identical to itself regardless of the axial angulation from which it is observed.

In particular, it may be noted that both the profile of the first lateral surface 21 and the profile of the second lateral surface 31 are curvilinear over the entire development thereof.

In particular, the second surface 31 has a concave profile which extends with a substantially constant radius of curvature of approximately 3 mm as far as the minimum point corresponding to the neck section 16, where it is joined to the first lateral surface 21.

There are identified thereon three different zones, starting from the second lateral surface 31 as far as the uppermost plane 17, which are specifically depicted in Figure 5.

In particular, the first lateral surface 21 comprises a connection region 22 which has a concave profile, and which extends in continuation of the second lateral surface 31, a first portion 23 with a convex profile, and a second portion 24 which also has a concave profile, and which extends as far as the uppermost plane 17.

The connection region 22 extends from the second lateral surface 31 while maintaining the same curvature thereof, so that the profile thereof is concave with a substantially constant radius of curvature of approximately 3 mm.

The first portion 23 has a convex profile with a substantially constant radius of curvature also of approximately 3 mm and comprises the maximum section 18, in which the body 11 has the maximum transverse dimension thereof of approximately 5.5 mm.

The second portion 24, on the other hand, has a concave profile with a substantially constant radius of curvature also of approximately 3 mm.

The connection region 22 and the first portion 23 are connected to each other by means of a first inflection point 25 while the first portion 23 and the second portion 24 are connected to each other by means of a second inflection point 26, which is aligned with the first inflection point 25 in a direction parallel with the longitudinal axis Z.

The first inflection point 25 and the second inflection point 26 are formed at a distance from the uppermost plane 17 of approximately 4.4 mm and approximately 1.5 mm, respectively.

Figures 6 to 9 illustrate additional embodiments of the stud of the present invention which are designated 110, 210, 310 and 410, respectively, wherein details similar to the stud 10 described above in detail are indicated with the same numerical references.

The stud 110 (Figure 6) is made of steel and has a generally similar conformation to that of the stud 10. The stud 110 differs from the stud 10 substantially as a result of a body 11 which is generally thinner and the different curvatures of the concave portions of the body 11.

In particular, for the same distance from the uppermost plane 17, the transverse dimension of the body of the stud 110 is always less by approximately 0.5 mm with respect to the dimension of the body of the stud 10.

Furthermore, the body of the stud 110 has radii of curvature of the second lateral surface 31, the connection region 22 and the second portion 24 of approximately 2.5 mm.

The stud 210 (Figure 7) is also made of steel and differs from the stud 110 as a result of a thinner formation of the second portion 24 of the head 20 and a radius of curvature which is slightly less in some portions of the lateral surface thereof.

In particular, the body of the stud 210 has radii of curvature of the second lateral surface 31 and the connection region 22 of approximately 2.3 mm and the first portion 23 of approximately 2.5 mm and the uppermost plane 17 has a diameter of approximately 3 mm.

The stud 310 (Figure 8) is also made of steel and differs from the stud 110 as a result of a thinner formation of the body 11 in the sections thereof with a minimal dimension and the different radii of curvature of the lateral surface portions thereof.

In particular, the diameter of the uppermost plane 17 and the neck section 16 is approximately 3 mm and the body of the stud 310 has radii of curvature of the second lateral surface 31, the connection region 22, the first portion 23 and the second portion 24 which are all approximately 2.3 mm.

The stud 410 (Figure 9) is made of aluminium and substantially differs from the stud 10 as a result of the shape of the head 20 which does not have the second portion with a concave profile.

In fact, in the stud 410 the first portion 23 extends as far as the uppermost plane 17, maintaining a constant radius of curvature of approximately 5.9 mm, while the second lateral surface 31 and the connection region 22 have a radius of curvature of approximately 1.4 mm.

Furthermore, in the stud 410 the first inflection point 25 is defined at a distance from the uppermost plane 17 of approximately 5.5 mm and the base 13 does not have the connection surface 14 so that the second lateral surface 31 is directly joined to the external edge of the base 13.

### EXAMPLES

The Applicant, by using suitable calculation models, has carried out simulations in order to evaluate the behaviour of the studs 10, 110, 210, 310 and 410, which are described in the preceding embodiments when they are received in respective holes 4 and where applicable subjected to specific external stresses which, by reproducing normal driving conditions, allow the evaluation, in a reasonably reliable manner, of the performance levels of the stud and the retention degree thereof inside the hole.

The characteristics of the elastomer material of the tread band used in the simulations are typical ones for a studded winter tyre.

In particular, by means of the simulations, the following parameters have been calculated and evaluated for each of the above-described studs:
- the fraction of the lateral surface of the stud in contact with the walls of the tread band when the stud is received in the hole;
- the mean contact pressure which is applied by the tread band to the lateral surface of the stud;
- the standard deviation of the contact pressure applied in the different regions of the lateral surface of the stud;
- the traction energy, and
- the extraction energy.

In the following table, where the studs 10, 110, 210, 310 and 410 are identified using the letters A, B, C, D and E, respectively, the values which resulted from the above-indicated simulations have been inserted.

| | **A** | **B** | **C** | **D** | **E** |
|---|---|---|---|---|---|
| Fraction of surface in contact | 0.83 | 0.81 | 0.87 | 0.69 | 0.73 |
| Mean contact pressure (MPa) | 1.74 | 1.51 | 1.36 | 1.43 | 2.15 |
| Standard deviation of pressure | 2.26 | 2.45 | 2.15 | 2.59 | 4.06 |
| Traction energy (mJ) | 92.5 | 89.4 | 86.3 | 85.8 | 92.9 |
| Extraction energy (mJ) | 1031 | 1041 | 1041 | 1035 | 978 |

From the analyses of the values set out in the preceding Table, it is possible to derive the following considerations.

The fraction of the lateral surface in contact with the walls of the tread band numerically expresses what part of the lateral surface of the stud is effectively involved in the retention action which is applied by the tread band to the stud.

The simulations have demonstrated how in all the studs the fraction of the lateral surface in contact with the walls of the hole formed in the tread band is particularly high, with values far greater than 0.6 or 60%.

In particular, it may be noted how for the studs A, B and C virtually all the lateral surface of the stud is in contact with the side wall of the hole and can therefore be subjected to the retention action applied by the tread band.

The mean contact pressure applied by the tread band to the lateral surface of the different studs has values which are higher in the studs A and D and which are generally comparable with those of the conventional studs.

However, the standard deviation values of the distribution of the pressure values calculated in the different zones of the lateral surface of the stud reveal how the pressure on the studs of the invention is distributed in a particularly uniform manner, avoiding zones which are subjected to powerful localized pressures and substantially load-free zones.

The standard deviation values of the studs of the invention are in fact particularly low with respect to values which are encountered in conventional studs which are often greater than 5, also going up to 8.

The traction energy (calculated as the energy necessary to obtain a predefined movement of the gripping pin by applying a tangential force to the tread band) shows values which are comparable with conventional studs with optimum results in the case of studs A and E.

The extraction energy (calculated as the energy necessary to obtain a radial movement of the stud of 70% of the axial dimension thereof by applying a force perpendicular to the tread surface) shows optimum overall values for the different studs evaluated.

Furthermore, a comparison between the stud E and the other studs A-D shows how a greater uniformity of distribution of the pressure can lead to a greater capacity for retention of the stud in the hole even with respect to a lower mean pressure, confirming the reliability of the recognition of the Applicant leading to the present invention.

Naturally, in order to comply with specific and contingent application requirements, a person skilled in the art may apply to the above-described invention additional modifications and variants which are still included within the scope of protection as defined by the appended claims.

## Claims

1. A stud for vehicle tyres comprising:
- a body (11) which extends along a longitudinal axis (Z) of said stud,
- a gripping pin (12) which extends longitudinally from said body,
- a base (13) which extends longitudinally from said body (11) at the opposite side to said gripping pin,
said body (11) comprising:
- a head (20), from which said gripping pin extends and
which is laterally delimited by a first lateral surface (21), and
- a shank (30) which extends between said base (13) and said head (20) and which has a mean transverse dimension less than said base (13) and said head (20),
wherein at least 80% of the extent of said first lateral surface (21) is curved and wherein at least 80% of the extent of said first lateral surface (21) has a curvilinear profile over the entire development thereof.

2. A stud for vehicle tyres comprising:
- a body (11) which extends along a longitudinal axis (Z) of said stud,
- a gripping pin (12) which extends longitudinally from said body,
- a base (13) which extends longitudinally from said body (11) at the opposite side to said gripping pin,
said body (11) comprising:
- a head (20), from which said gripping pin extends and
which is laterally delimited by a first lateral surface (21), and
- a shank (30) which extends between said base (13) and said head (20) and which has a mean transverse dimension less than said base (13) and said head (20),
wherein at least 80% of the extent of said first lateral surface (21) is curved and wherein the entire extent of said first lateral surface (21) of said head (20) has a profile which is curvilinear over at least 80% of the development thereof.

3. A stud according to any one of the preceding claims, wherein the entire extent of said first lateral surface (21) of said head (20) has a curvilinear profile over the entire development thereof and wherein said head (20) is symmetrical with respect to said longitudinal axis (Z).

4. A stud according to any one of the preceding claims, wherein said shank (30) is laterally delimited by a second lateral surface (31) and at least 80% of the extent of said second lateral surface (31) is curved.

5. A stud according to claim 4, wherein said first lateral surface (21) comprises a connection region (22) with respect to said second lateral surface (31), said connection region (22) extending from said second lateral surface (31) while maintaining the same curvature as said second lateral surface (31).

6. A stud according to claim 5, wherein said first lateral surface (21) comprises a first portion (23) which extends from said connection region (22) and which has a convex profile and wherein said first portion (23) and said connection region (22) are connected to each other by means of a first inflection zone.

7. A stud according to any one of the preceding claims, wherein said first lateral surface (21) extends as far as an uppermost plane (17) of said body, from which said gripping pin extends.

8. A stud according to claim 7 when dependent on claim 6, wherein said first portion (23) of said first lateral surface extends from said connection region (22) as far as said uppermost plane (17).

9. A stud according to claim 7 or 8, wherein said uppermost plane (17) has a transverse dimension substantially equal to the minimum transverse dimension of said shank (30).

10. A stud according to claim 7 when dependent on claim 6, wherein said first lateral surface comprises a second portion (24) having a concave profile, which is connected to said first portion (23) and which extends as far as said uppermost plane (17).

11. A stud according to claim 10, wherein said first portion (23) of said first lateral surface (21) is connected to said second portion (24) of said first lateral surface by means of a second inflection zone.

12. A stud according to claim 10 or 11, wherein said second portion (24) of said first lateral surface has a profile with a substantially constant radius of curvature.

13. A stud according to claim 12, wherein the radius of curvature of said second portion (24) of said first lateral surface (21) is substantially equal to the radius of curvature of said second lateral surface (31).

14. A stud according to claim 12 or 13, wherein the measurement of the radius of curvature of said first portion (23) of said first lateral surface (21) is substantially equal to the measurement of the radius of curvature of said second portion (24) of said first lateral surface (21).

15. A studded tyre (1) comprising a tread band (2), on which a tread surface (3) of said tyre is defined, and a plurality of studs (10; 110; 210; 310; 410) which are received in engagement in corresponding holes (4) which are formed in said tread band and which are open in said tread surface, wherein said studs (10; 110; 210; 310; 410) are realized according to any one of the preceding claims.

## Patentansprüche

1. Spike für Fahrzeugreifen, umfassend:
- einen Körper (11), der sich entlang einer Längsachse (Z) des Spikes erstreckt,
- einen Greifstift (12), der sich in Längsrichtung von dem Körper erstreckt,
- eine Basis (13), die sich in Längsrichtung von dem Körper (11) an der dem Greifstift gegenüberliegenden Seite erstreckt,
wobei der Körper (11) Folgendes umfasst:
- einen Kopf (20), von dem sich der Greifstift erstreckt und
der seitlich von einer ersten Seitenfläche (21) begrenzt ist, und
- einen Schaft (30), der sich zwischen der Basis (13) und dem Kopf (20) erstreckt und der eine mittlere Querabmessung aufweist, die kleiner als die Basis (13) und der Kopf (20) ist,
wobei mindestens 80 % der Erstreckung der ersten Seitenfläche (21) gekrümmt ist und wobei mindestens 80 % der Erstreckung der ersten Seitenfläche (21) über die gesamte Entwicklung davon ein krummliniges Profil aufweist.

2. Spike für Fahrzeugreifen, umfassend:
- einen Körper (11), der sich entlang einer Längsachse (Z) des Spikes erstreckt,
- einen Greifstift (12), der sich in Längsrichtung von dem Körper erstreckt,
- eine Basis (13), die sich in Längsrichtung von dem Körper (11) an der dem Greifstift gegenüberliegenden Seite erstreckt,
wobei der Körper (11) Folgendes umfasst:
- einen Kopf (20), von dem sich der Greifstift erstreckt und der seitlich von einer ersten Seitenfläche (21) begrenzt ist, und
- einen Schaft (30), der sich zwischen der Basis (13) und dem Kopf (20) erstreckt und der eine mittlere Querabmessung aufweist, die kleiner als die Basis (13) und der Kopf (20) ist,
wobei mindestens 80 % der Erstreckung der ersten Seitenfläche (21) gekrümmt ist und wobei die gesamte Erstreckung der ersten Seitenfläche (21) des Kopfes (20) ein Profil aufweist, das über mindestens 80 % der Entwicklung davon krummlinig ist.

3. Spike nach einem der vorstehenden Ansprüche, wobei die gesamte Erstreckung der ersten Seitenfläche (21) des Kopfes (20) über die gesamte Entwicklung davon ein krummliniges Profil aufweist und wobei der Kopf (20) symmetrisch in Bezug auf die Längsachse (Z) ist.

4. Spike nach einem der vorstehenden Ansprüche, wobei der Schaft (30) seitlich durch eine zweite Seitenfläche (31) begrenzt ist und mindestens 80 % der Erstreckung der zweiten Seitenfläche (31) gekrümmt ist.

5. Spike nach Anspruch 4, wobei die erste Seitenfläche (21) einen Verbindungsbereich (22) in Bezug auf die zweite Seitenfläche (31) umfasst, wobei sich der Verbindungsbereich (22) von der zweiten Seitenfläche (31) erstreckt und dabei die gleiche Krümmung wie die zweite Seitenfläche (31) beibehält.

6. Spike nach Anspruch 5, wobei die erste Seitenfläche (21) einen ersten Abschnitt (23) umfasst, der sich von dem Verbindungsbereich (22) erstreckt und der ein konvexes Profil aufweist, und wobei der erste Abschnitt (23) und der Verbindungsbereich (22) mittels einer ersten Wendezone miteinander verbunden sind.

7. Spike nach einem der vorstehenden Ansprüche, wobei sich die erste Seitenfläche (21) bis zu einer obersten Ebene (17) des Körpers erstreckt, von der sich der Greifstift erstreckt.

8. Spike nach Anspruch 7, wenn abhängig von Anspruch 6, wobei sich der erste Abschnitt (23) der ersten Seitenfläche von dem Verbindungsbereich (22) bis zu der obersten Ebene (17) erstreckt.

9. Spike nach Anspruch 7 oder 8, wobei die oberste Ebene (17) eine Querabmessung aufweist, die im Wesentlichen gleich der minimalen Querabmessung des Schaftes (30) ist.

10. Spike nach Anspruch 7, wenn abhängig von Anspruch 6, wobei die erste Seitenfläche einen zweiten Abschnitt (24) umfasst, der ein konkaves Profil aufweist, der mit dem ersten Abschnitt (23) verbunden ist und der sich bis zu der obersten Ebene (17) erstreckt.

11. Spike nach Anspruch 10, wobei der erste Abschnitt (23) der ersten Seitenfläche (21) mit dem zweiten Abschnitt (24) der ersten Seitenfläche mittels einer zweiten Wendezone verbunden ist.

12. Spike nach Anspruch 10 oder 11, wobei der zweite Abschnitt (24) der ersten Seitenfläche ein Profil mit einem im Wesentlichen konstanten Krümmungsradius aufweist.

13. Spike nach Anspruch 12, wobei der Krümmungsradius des zweiten Abschnitts (24) der ersten Seitenfläche (21) im Wesentlichen gleich dem Krümmungsradius der zweiten Seitenfläche (31) ist.

14. Spike nach Anspruch 12 oder 13, wobei die Messung des Krümmungsradius des ersten Abschnitts (23) der ersten Seitenfläche (21) im Wesentlichen gleich der Messung des Krümmungsradius des zweiten Abschnitts (24) der ersten Seitenfläche (21) ist.

15. Spikereifen (1), umfassend ein Laufflächenband (2), auf dem eine Lauffläche (3) des Reifens definiert ist, und eine Vielzahl von Spikes (10; 110; 210; 310; 410), die in Eingriff in entsprechenden Löchern (4) aufgenommen sind, die in dem Laufflächenband gebildet sind und die in der Lauffläche offen sind, wobei die Spikes (10; 110; 210; 310; 410) nach einem der vorstehenden Ansprüche ausgebildet sind.

## Revendications

1. Clou pour pneus de véhicule comprenant :
- un corps (11) qui s'étend selon un axe longitudinal (Z) dudit clou,
- une broche de préhension (12) qui s'étend longitudinalement à partir dudit corps,
- une base (13) qui s'étend longitudinalement à partir dudit corps (11) du côté opposé à ladite broche de préhension,
ledit corps (11) comprenant :
- une tête (20), à partir de laquelle s'étend ladite broche de préhension et
qui est délimitée latéralement par une première surface latérale (21), et
- une tige (30) qui s'étend entre ladite base (13) et ladite tête (20) et qui présente une dimension transversale moyenne inférieure à ladite base (13) et à ladite tête (20),
dans lequel au moins 80 % de l'étendue de ladite première surface latérale (21) est incurvée et dans lequel au moins 80 % de l'étendue de ladite première surface latérale (21) présente un profil curviligne sur toute sa longueur.

2. Clou pour pneus de véhicule comprenant :
- un corps (11) qui s'étend selon un axe longitudinal (Z) dudit clou,
- une broche de préhension (12) qui s'étend longitudinalement à partir dudit corps,
- une base (13) qui s'étend longitudinalement à partir dudit corps (11) du côté opposé à ladite broche de préhension,
ledit corps (11) comprenant :
- une tête (20), à partir de laquelle s'étend ladite broche de préhension et qui est délimitée latéralement par une première surface latérale (21), et
- une tige (30) qui s'étend entre ladite base (13) et ladite tête (20) et qui présente une dimension transversale moyenne inférieure à ladite base (13) et à ladite tête (20),
dans lequel au moins 80 % de l'étendue de ladite première surface latérale (21) est incurvée et dans lequel toute l'étendue de ladite première surface latérale (21) de ladite tête (20) présente un profil qui est curviligne sur au moins 80 % de sa longueur.

3. Clou selon l'une quelconque des revendications précédentes, dans lequel toute l'étendue de ladite première surface latérale (21) de ladite tête (20) présente un profil curviligne sur toute sa longueur et dans lequel ladite tête (20) est symétrique par rapport audit axe longitudinal (Z).

4. Clou selon l'une quelconque des revendications précédentes, dans lequel ladite tige (30) est délimitée latéralement par une seconde surface latérale (31) et au moins 80 % de l'étendue de ladite seconde surface latérale (31) est incurvée.

5. Clou selon la revendication 4, dans lequel ladite première surface latérale (21) comprend une région de connexion (22) par rapport à ladite seconde surface latérale (31), ladite région de connexion (22) s'étendant à partir de ladite seconde surface latérale (31) tout en conservant la même courbure que ladite seconde surface latérale (31).

6. Clou selon la revendication 5, dans lequel ladite première surface latérale (21) comprend une première partie (23) qui s'étend à partir de ladite région de connexion (22) et qui présente un profil convexe et dans lequel ladite première partie (23) et ladite région de connexion (22) sont reliées l'une à l'autre au moyen d'une première zone d'inflexion.

7. Clou selon l'une quelconque des revendications précédentes, dans lequel ladite première surface latérale (21) s'étend jusqu'à un plan supérieur extrême (17) dudit corps, à partir duquel s'étend ladite broche de préhension.

8. Clou selon la revendication 7 lorsqu'elle dépend de la revendication 6, dans lequel ladite première partie (23) de ladite première surface latérale s'étend depuis ladite région de connexion (22) jusqu'audit plan supérieur extrême (17).

9. Clou selon la revendication 7 ou 8, dans lequel ledit plan supérieur extrême (17) présente une dimension transversale sensiblement égale à la dimension transversale minimale de ladite tige (30).

10. Clou selon la revendication 7 lorsqu'elle dépend de la revendication 6, dans lequel ladite première surface latérale comprend une seconde partie (24) présentant un profil concave, qui est reliée à ladite première partie (23) et qui s'étend jusqu'audit plan supérieur extrême (17).

11. Clou selon la revendication 10, dans lequel ladite première partie (23) de ladite première surface latérale (21) est reliée à ladite seconde partie (24) de ladite première surface latérale au moyen d'une seconde zone d'inflexion.

12. Clou selon la revendication 10 ou 11, dans lequel ladite seconde partie (24) de ladite première surface latérale présente un profil avec un rayon de courbure sensiblement constant.

13. Clou selon la revendication 12, dans lequel le rayon de courbure de ladite seconde partie (24) de ladite première surface latérale (21) est sensiblement égal au rayon de courbure de ladite seconde surface latérale (31).

14. Clou selon la revendication 12 ou 13, dans lequel la mesure du rayon de courbure de ladite première partie (23) de ladite première surface latérale (21) est sensiblement égale à la mesure du rayon de courbure de ladite seconde partie (24) de ladite première surface latérale (21).

15. Pneu clouté (1) comprenant une bande de roulement (2), sur laquelle est définie une surface de roulement (3) dudit pneu, et une pluralité de clous (10 ; 110 ; 210 ; 310 ; 410) qui sont logés en prise dans des trous correspondants (4) qui sont formés dans ladite bande de roulement et qui sont ouverts dans ladite surface de roulement, dans lequel lesdits clous (10 ; 110 ; 210 ; 310 ; 410) sont réalisés selon l'une quelconque des revendications précédentes.
